# FASCICULE DE BREVET EUROPEEN

(11) **EP 0 999 469 B1**
(45) Date de publication et mention de la délivrance du brevet: **16.06.2004**
(21) Numéro de dépôt: 99402631.8
(22) Date de dépôt: 20.10.1999
(51) Int. Cl.: G03B 21/00, G09F 21/08

(54) **Système de projection d'images**
Bildprojektionssystem
Image projection device

(30) Priorité: 04.11.1998 FR 9813972
(43) Date de publication de la demande: 10.05.2000
(73) Titulaire: Joseph, Patrick, 78370 Plaisir (FR)
(72) Inventeur: Joseph, Patrick, 78370 Plaisir (FR)
(74) Mandataire: Ramey, Daniel

(56) Documents cités:
- US-A- 4 597 633
- PATENT ABSTRACTS OF JAPAN vol. 18, no. 513 (P-1805), 27 septembre 1994 (1994-09-27) & JP 06 175593 A (THE LASER K.K.)

## Description

L'invention concerne de façon générale un système de projection d'images et, plus particulièrement, un système de projection destiné à être utilisé de nuit ou dans l'obscurité, pour des spectacles son et lumière, des illuminations de monuments ou de sites particuliers, des manifestations culturelles, des événements sportifs, des annonces publicitaires, etc.

Les systèmes connus de projection d'images sont en général conçus pour projeter des images sur des écrans plats et fixes, ce qui peut limiter leur intérêt et ne permet pas de les utiliser dans certains cas, notamment lorsqu'il faut projeter avec précision des images sur des écrans mobiles ou non-immobilisés.

On connaît par exemple par les documents JP-A-04.329590 et JP-A-06.175593, des systèmes comprenant un ballon gonflable à l'intérieur duquel est monté un projecteur éventuellement associé à un miroir convexe pour former des images sur la paroi interne du ballon. Ces systèmes connus ont pour inconvénients majeurs que le projecteur à l'intérieur du ballon est pratiquement inaccessible et génère en fonctionnement une grande quantité de chaleur qui s'accumule à l'intérieur du ballon et peut devenir dangereuse.

L'invention a pour but d'éviter ces inconvénients de la technique antérieure et a pour objet un système de projection d'images permettant de former des images de haute qualité sur un écran non plat et/ou non-immobilisé qui peut se trouver à une hauteur importante au-dessus du sol en n'importe quel endroit souhaité, notamment en plein-air, sans risques pour le public ou les opérateurs.

Elle propose, à cet effet, un système de projection d'images selon la rev. 1.

Les images projetées sur la partie du ballon formant écran sont très nettes et bien saturées, du fait que le projecteur se trouve à une distance relativement faible de l'écran et que sa position reste fixe par rapport à l'écran, bien que ce dernier puisse se déplacer par rapport au public et se trouver à une distance relativement importante, de plus de 10 mètres par exemple, au-dessus du sol ou du public, sans risque pour le public et les opérateurs même lorsque la projection se prolonge sur une période de temps importante.

Le miroir convexe porté par le ballon et interposé entre le projecteur et l'écran permet d'agrandir la taille de l'image formée sur l'écran et de compenser au moins en partie, par les déformations de l'image causées par la réflexion sur le miroir convexe, celles causées par la projection sur la surface interne concave du ballon.

En outre, le cadre de la fenêtre peut être utilisé pour la fixation d'un support de projecteur et d'un support de miroir.

On peut bien entendu associer plusieurs projecteurs au même ballon.

Selon les systèmes optiques utilisés, la ou les images projetées sur le ballon peuvent occuper sensiblement une fraction ou la moitié de la surface sphérique du ballon, ou bien la quasi-totalité de cette surface.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 illustre le principe du système de projection selon l'invention ;
- la figure 2 illustre une variante de ce principe ;
- les figures 3 et 4 sont des vues de face et de côté respectivement des moyens de fixation du projecteur et du miroir sur le ballon ;
- la figure 5 est une vue schématique en perspective des moyens d'attache au sol du système selon l'invention ;
- la figure 6 représente schématiquement une variante de réalisation de l'invention.

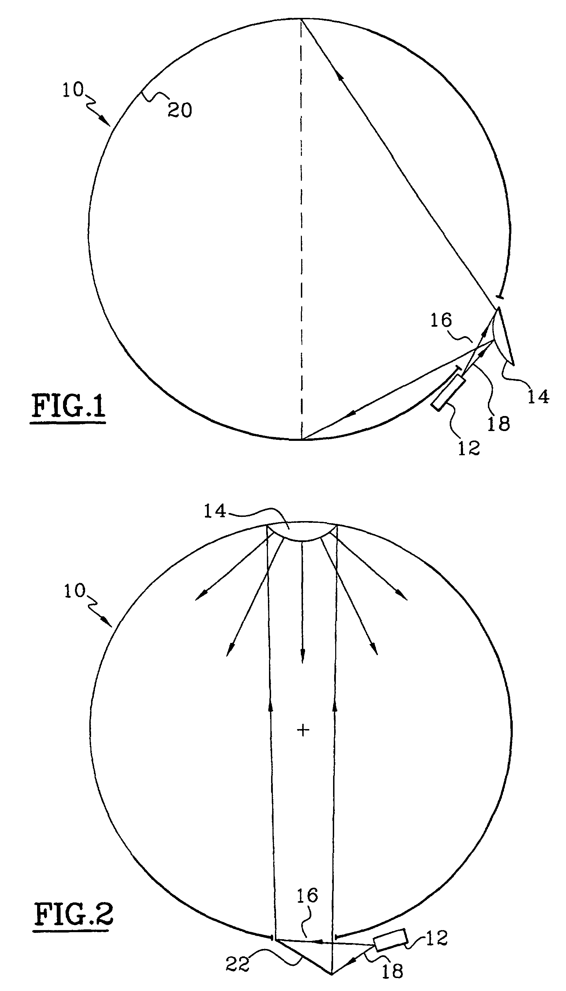

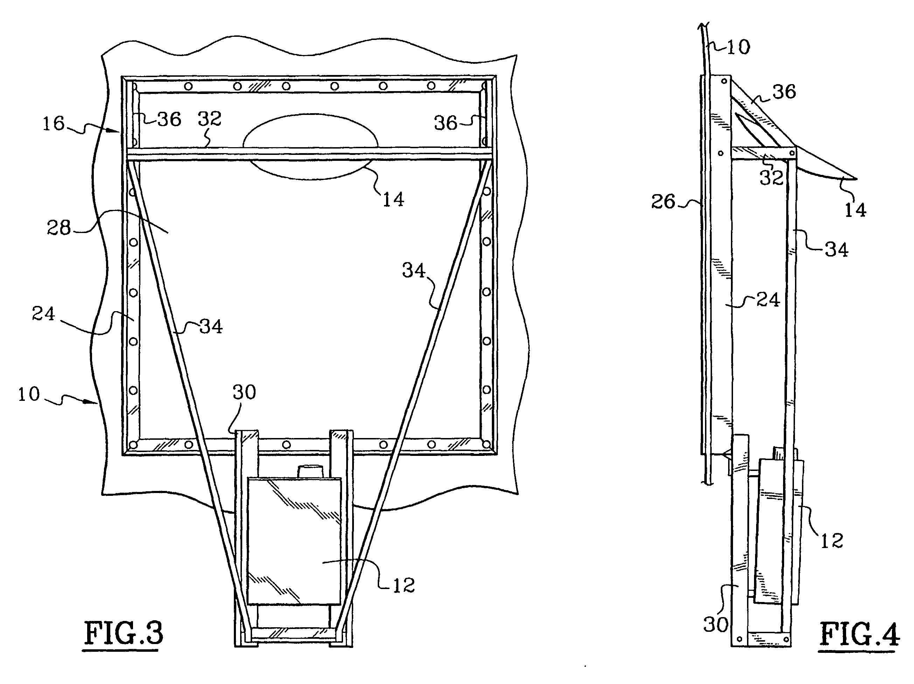

En figure 1, la référence 10 désigne un ballon gonflable sphérique, ascensionnel ou suspendu, réalisé en une matière souple et étanche permettant la rétroprojection d'images, telle par exemple qu'un PVC à surface intérieure lisse et à surface extérieure perlée, ce ballon 10 étant associé à un projecteur 12 et à un miroir convexe 14 qui, dans cet exemple, se trouvent à l'extérieur du ballon en étant fixés à celui-ci par des moyens qui seront décrits en détail en référence aux figures 3 et 4.

Le projecteur 12 est équipé d'une source lumineuse et d'un objectif lui permettant de former une image nette sur une surface écran située à une certaine distance, cette surface écran étant ici la surface interne d'une partie du ballon 10.

On peut utiliser dans le système selon l'invention un projecteur de diapositives, un vidéoprojecteur (comportant un écran du type LCD ou analogue sur lequel on peut former une image vidéo ou informatique qu'on projette au moyen d'un faisceau lumineux), un projecteur de film cinématographique, un projecteur utilisant un défilant translucide du type épiscope, ou tout autre appareil projetant un faisceau lumineux porteur d'images. Le miroir 14 réfléchit vers l'intérieur du ballon, à travers une fenêtre transparente 16 de celui-ci, le faisceau lumineux 18 émis par le projecteur 12, de façon à former une image sur une partie 20 de la surface interne du ballon. La dimension de l'image est déterminée par l'objectif du projecteur 12, par la distance entre le projecteur 12 et le miroir 14, par la distance entre le miroir 14 et la surface 20 du ballon formant écran, ainsi que par la courbure du miroir 14.

De préférence, cette courbure est déterminée de façon à ce que les déformations d'images qui sont causées par la réflexion du faisceau 18 sur la surface convexe du miroir 14 et celles dues à la projection de ce faisceau sur la surface interne concave 20 du ballon se compensent mutuellement.

Dans un exemple particulier de réalisation de l'invention, le projecteur est équipé d'un objectif à focale variable entre 55 et 74 mm, la distance entre cet objectif et le miroir 14 est d'environ 800 mm et le miroir 14 est formé d'une calotte sphérique dont la base a un diamètre de 400 mm environ et dont la hauteur est comprise entre 30 et 40 mm environ. Dans ces conditions, l'image formée sur la surface interne du ballon 10 (dont le diamètre est de l'ordre de 6 mètres) est sensiblement semi-sphérique comme représenté en figure 1. Les dimensions de la fenêtre transparente 16 formée dans le ballon 10 sont de l'ordre de 1mx1m.

Dans la variante de réalisation représentée schématiquement en figure 2, le projecteur 12 est associé à un miroir plan 22 qui reçoit le faisceau lumineux 18 émis et le réfléchit, à travers une fenêtre transparente 16 du ballon, en direction d'un miroir convexe 14 qui est sensiblement diamétralement opposé au miroir plan 22 et à la fenêtre transparente 16 et qui est disposé à l'intérieur du ballon 10.

Dans ces conditions, le faisceau émis par le projecteur 12 et réfléchi par le miroir plan 22 est réfléchi par le miroir convexe 14 sur la quasi-totalité de la surface interne sphérique du ballon 10.

Les moyens utilisés pour la fixation du projecteur 12 et du miroir 14 sur le ballon 10 dans le mode de réalisation de la figure 1 sont représentés en détail aux figures 3 et 4 et comprennent essentiellement un cadre 24 et un contre-cadre 26, rigides et réalisés par exemple en aluminium, qui sont ici de forme carrée et qui sont appliqués et fixés l'un sur l'autre par des vis en serrant entre eux, de façon étanche, les bords de la fenêtre 16 formée dans la matière du ballon 10 et les bords d'une feuille 28 de matière plastique qui obture à étanchéité cette fenêtre et qui est en une matière fine, souple et transparente, telle que celle commercialisée sous l'appellation "Mylar".

Le projecteur 12 est fixé sur un berceau 30, réalisé également en aluminium et fixé lui-même par vissage sur la traverse inférieure du cadre 24. Le miroir 14 est fixé sur la barre transversale d'un étrier en U 32 fixé sur le cadre 24. Des entretoises de rigidification 34 et 36 relient cet étrier au berceau 30 du projecteur 12 et à la traverse supérieure du cadre 24, respectivement.

Avantageusement, les fixations du berceau 30 et de l'étrier 32 sur le cadre 24 sont réglables.

Le ballon 10, équipé de la fenêtre transparente 16 qui vient d'être décrite et des moyens de support du projecteur 12 et du miroir 14, est gonflé avec de l'air (auquel cas ce ballon est destiné à être suspendu à des moyens appropriés tels qu'une grue par exemple) ou avec un gaz plus léger que l'air, tel que l'hélium par exemple, pour développer un pouvoir ascensionnel supérieur au poids du ballon 10 et de son équipement, et permettant d'utiliser le ballon 10 à des hauteurs au-dessus du sol comprises entre une dizaine et une cinquantaine de mètres par exemple, ou davantage.

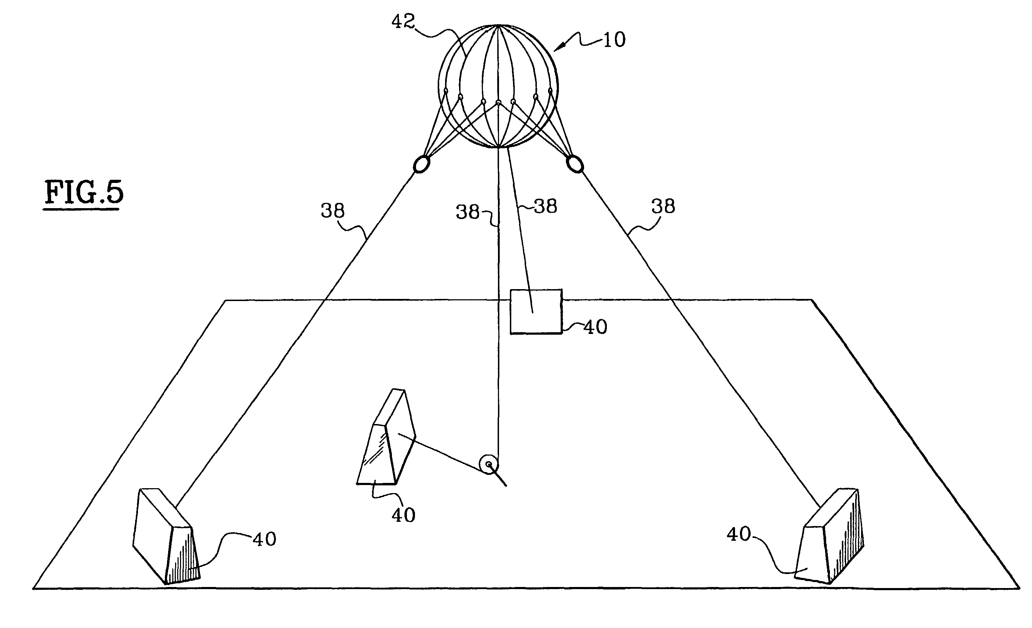

Comme représenté en figure 5, le ballon 10 est retenu par des câbles 38 associés à des moyens motorisés d'enroulement 40, comprenant par exemple un câble vertical et trois câbles obliques à 120 degrés les uns des autres, bien que toute autre disposition soit également possible.

Ces câbles 38 sont reliés du côté du ballon 10 à un filet 42 qui enserre le ballon et qui est formé de fils fins et résistants, fixés en plusieurs points sur le ballon 10 et réalisés par exemple en fibres d'aramide, telles que celles commercialisées sous l'appellation "Kevlar", de même que les câbles 38, de sorte que ces câbles et le filet 42 sont à peu près invisibles pour un observateur situé à une distance de plus de 10 mètres, dans les conditions normales d'utilisation du système selon l'invention, c'est-à-dire en rétroprojection de nuit ou dans l'obscurité.

Le fonctionnement de ce système est le suivant :
on règle au sol les positions du projecteur 12 et du miroir 14 pour former une image nette sur la paroi 20 du ballon, celui-ci étant gonflé et retenu au sol par les câbles 38 enroulés dans les moyens 40.

Ces derniers peuvent être synchronisés et associés à un système de commande commun, pour plus de commodité.

Il ne reste plus ensuite qu'à dérouler les câbles 38 pour amener le ballon 10 à la hauteur voulue au-dessus du sol.

En commandant de façon différentielle les moyens d'enroulement 40, on peut provoquer des déplacements latéraux du ballon 10.

L'alimentation électrique et la commande du projecteur 12 sont assurées ainsi que le cas échéant la transmission d'images vidéo ou informatiques au moyen de câbles qui descendent par exemple le long du câble vertical 38 reliant le ballon 10 au sol. Des moyens de télécommande et de liaison par transmission HF peuvent également être utilisés.

On peut ainsi, par exemple, définir depuis le sol les images formées sur la paroi 20 du ballon 10 et régler leur netteté et leurs dimensions.

De plus, on peut également prévoir sur le ballon des moyens motorisés de réglage de l'orientation du miroir 14, commandés ou télécommandés depuis le sol.

Bien entendu, un certain nombre de modifications peuvent être apportées par l'homme du métier aux moyens décrits et représentés. Par exemple, deux ou plusieurs projecteurs peuvent être portés par le ballon 10, au lieu d'un seul, pour projeter simultanément des images différentes sur plusieurs parties du ballon 10, chaque image ayant une plus grande intensité lumineuse.

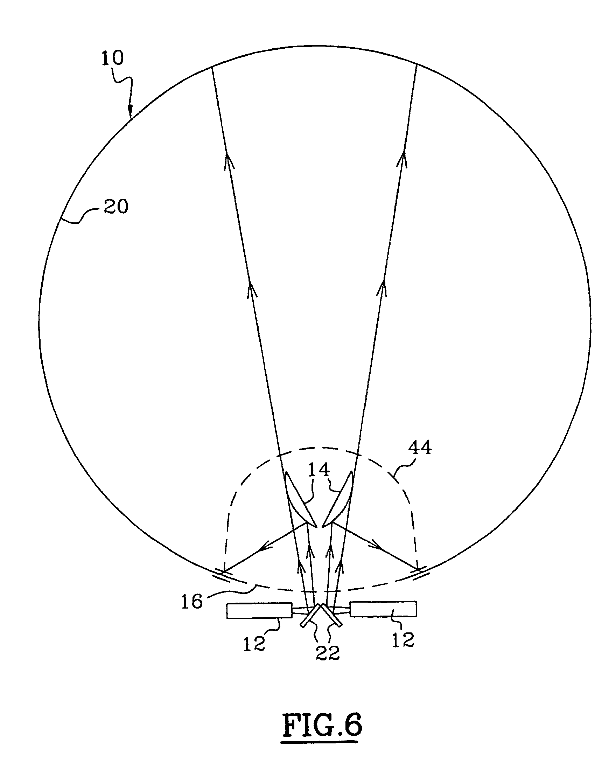

Dans l'exemple de réalisation représenté en figure 6, au moins deux projecteurs 12 sont associés chacun à un miroir plan 22 et à un miroir convexe 14, les projecteurs 12 et les miroirs plans 22 étant à l'extérieur du ballon 10, les miroirs 14 étant à l'intérieur du ballon dans une enveloppe ou "bulle" 44 de matière transparente, telle avantageusement qu'une matière plastique rigide de type "PLEXIGLASS" ou polyméthacrylate de méthyle.

## Revendications

1. Système de projection d'images, comprenant au moins un ballon (10) ascensionnel ou suspendu, un projecteur (12) équipé d'une source lumineuse et d'un objectif et porté par le ballon (10) dont au moins une partie (20) constitue un écran sur lequel des images sont formées depuis l'intérieur du ballon (10), et au moins un miroir convexe (14) porté par le ballon (10) et interposé entre le projecteur (12) et l'écran, **caractérisé en ce que** le projecteur (12) et ledit miroir sont montés à l'extérieur du ballon (10) et projettent des images sur l'écran (20) à travers une fenêtre transparente (16) formée dans le ballon.

2. Système selon la revendication 1, **caractérisé en ce que** le projecteur (12) est fixé par un support (30) sur le cadre (24) de la fenêtre.

3. Système selon la revendication 1 ou 2, **caractérisé en ce que** le miroir (14) est monté à l'extérieur du ballon (10) et est fixé par un support (32) sur le cadre (24) de la fenêtre.

4. Système selon la revendication 1 ou 2, **caractérisé en ce que** le miroir (14) est monté à l'intérieur du ballon (10) et est diamétralement opposé à la fenêtre transparente (16).

5. Système selon la revendication 4, **caractérisé en ce que** le projecteur (12) est associé à un miroir plan (22) qui réfléchit à travers la fenêtre (16) le faisceau émis par le projecteur.

6. Système selon la revendication 1 ou 2, **caractérisé en ce qu'**il comprend au moins deux projecteurs (12) associés à des miroirs plans (22) qui réfléchissent à travers la fenêtre (16) les faisceaux émis par les projecteurs (12) vers des miroirs convexes (14) placés dans une enveloppe transparente à l'intérieur du ballon (10).

7. Système selon l'une des revendications précédentes, **caractérisé en ce que** la ou les images formées sur l'écran (20) sont sensiblement semi-sphériques ou sphériques.

8. Système selon l'une des revendications précédentes, **caractérisé en ce que** le ou chaque projecteur (12) est un vidéoprojecteur.

9. Système selon l'une des revendications précédentes, **caractérisé en ce que** le ballon (10) est réalisé en une matière souple et étanche permettant la rétroprojection d'images, par exemple en une matière plastique à face interne lisse et à face externe perlée.

10. Système selon l'une des revendications précédentes, **caractérisé en ce que** le ballon (10) est relié par une série de filins qui forment un filet (42) autour du ballon, à des câbles (38) associés à des moyens d'enroulement (40) au sol permettant de modifier l'altitude du ballon et de le déplacer latéralement.

## Patentansprüche

1. Bildprojektionssystem, umfassend mindestens einen aufsteigenden oder aufgehängten Ballon (10), einen Projektor (12), der mit einer Lichtquelle und einem Objektiv versehen ist und vom Ballon (10) getragen wird, von dem mindestens ein Teil (20) eine Leinwand darstellt, auf der aus dem Inneren des Ballons (10) Bilder geformt werden, und mindestens einen Konvexspiegel (14), der vom Ballon (10) getragen wird und zwischen dem Projektor (12) und der Leinwand angeordnet ist, **dadurch gekennzeichnet, dass** der Projektor (12) und der genannte Spiegel außerhalb des Ballons (10) angebracht sind und Bilder durch ein durchsichtiges Fenster (16), das im Ballon ausgebildet ist, auf die Leinwand (20) projizieren.

2. System nach Patentanspruch 1, **dadurch gekennzeichnet, dass** der Projektor (12) durch einen Halter (30) am Rahmen (24) des Fensters befestigt ist.

3. System nach Patentanspruch 1 oder 2, **dadurch gekennzeichnet, dass** der Spiegel (14) außerhalb des Ballons (10) angebracht und durch einen Halter (32) am Rahmen (24) des Fensters befestigt ist.

4. System nach Patentanspruch 1 oder 2, **dadurch gekennzeichnet, dass** der Spiegel (14) innerhalb des Ballons (10) angebracht ist und dem durchsichtigen Fenster (16) diametral gegenüberliegt.

5. System nach Patentanspruch 4, **dadurch gekennzeichnet, dass** der Projektor (12) mit einem Planspiegel (22) verbunden ist, der den vom Projektor ausgesandten Strahl durch das Fenster (16) reflektiert.

6. System nach Patentanspruch 1 oder 2, **dadurch gekennzeichnet, dass** es mindestens zwei Projektoren (12) umfasst, die mit Planspiegeln (22) verbunden sind, die die von den Projektoren (12) ausgesandten Strahlen durch das Fenster (16) auf Konvexspiegel (14) reflektieren, die in einer durchsichtigen Hülle im Inneren des Ballons (10) angeordnet sind.

7. System nach einem der vorangehenden Patentansprüche, **dadurch gekennzeichnet, dass** das oder die auf der Leinwand (20) geformten Bilder im Wesentlichen halbkugelförmig oder kugelförmig sind.

8. System nach einem der vorangehenden Patentansprüche, **dadurch gekennzeichnet, dass** der oder jeder Projektor (12) ein Videoprojektor ist.

9. System nach einem der vorangehenden Patentansprüche, **dadurch gekennzeichnet, dass** der Ballon (10) aus einem weichen und dichten Werkstoff gefertigt ist, der die Durchprojektion von Bildern erlaubt, beispielsweise aus einem Kunststoff mit glatter Innseite und geperlter Außenseite.

10. System nach einem der vorangehenden Patentansprüche, **dadurch gekennzeichnet, dass** der Ballon (10) durch eine Reihe von Seilen, die ein Netz (42) um den Ballon bilden, mit Tauen (38) verbunden ist, die mit Aufrollmitteln (40) am Boden verbunden sind, die erlauben, die Höhe des Ballons zu ändern und ihn seiitlich zu bewegen.

## Claims

1. Image projection system, comprising at least one rising or suspended balloon (10), a projector (12) equipped with a light source and a lens and carried by the balloon (10), at least part of which (20) constitutes a screen on which images are formed from inside the balloon (10), and at least one convex mirror (14) carried by the balloon (10) and interposed between the projector (12) and the screen, **characterised in that** the projector (12) and the mirror are mounted outside the balloon (10) and project images onto the screen (20) through a transparent window (16) formed in the balloon.

2. System according to claim 1, **characterised in that** the projector (12) is fixed by a support (30) on the frame (24) of the window.

3. System according to claim 1 or 2, **characterised in that** the mirror (14) is mounted on the outside of the balloon (10) and is fixed by a support (32) on the frame (24) of the window.

4. System according to claim 1 or 2, **characterised in that** the mirror (14) is mounted on the outside of the balloon (10) and is diametrically opposite the transparent window (16).

5. System according to claim 4, **characterised in that** the projector (12) is associated with a plane mirror (22) which reflects the beam emitted by the projector through the window (16).

6. System according to claim 1 or 2, **characterised in that** it comprises at least two projectors (12) associated with plane mirrors (22) which reflect the beams emitted by the projectors (12) through the window (16) towards convex mirrors (14) placed in a transparent casing inside the balloon (10).

7. System according to one of the preceding claims, **characterised in that** the image or images formed on the screen (20) are substantially hemispherical or spherical.

8. System according to one of the preceding claims, **characterised in that** the or each projector (12) is a video projector.

9. System according to one of the preceding claims, **characterised in that** the balloon (10) is made of a flexible leaktight material which allows the backprojection of images, for example a plastic material with a smooth inner surface and a pearl outer surface.

10. System according to one of the preceding claims, **characterised in that** the balloon (10) is connected by a series of ropes forming a net (42) around the balloon to cables (38) associated with winding means (40) on the ground for altering the height of the balloon and moving it laterally.
